# EUROPÄISCHE PATENTSCHRIFT

(11) **EP 1 716 325 B1**
(45) Veröffentlichungstag und Bekanntmachung des Hinweises auf die Patenterteilung: **06.01.2010**
(21) Anmeldenummer: 05707113.6
(22) Anmeldetag: 01.02.2005
(51) Int. Cl.: F02B 29/04, F02M 25/07

(54) **ANORDNUNG ZUR KÜHLUNG VON ABGAS UND LADELUFT**
ARRANGEMENT FOR COOLING EXHAUST GAS AND CHARGE AIR
DISPOSITIF DE REFROIDISSEMENT DE GAZ D'ECHAPPEMENT ET D'AIR DE COMPRESSION

(30) Priorität: 01.02.2004 DE 102004005057
(43) Veröffentlichungstag der Anmeldung: 02.11.2006
(73) Patentinhaber: Behr GmbH & Co. KG, 70469 Stuttgart (DE)
(72) Erfinder: MÜLLER, Rolf, 71642 Ludwigsburg (DE); PANTOW, Eberhard, 70696 Möglingen (DE)
(74) Vertreter: Mantel, Berthold Friedrich
(86) Internationale Anmeldenummer: PCT/EP2005/000970
(87) Internationale Veröffentlichungsnummer: WO 2005/073535

(56) Entgegenhaltungen:
- EP-A- 1 059 432
- EP-A- 1 091 113
- EP-A- 1 170 498
- WO-A-99/15773
- WO-A-03/069149
- WO-A-2004/044402
- DE-A1- 19 633 190

## Beschreibung

Die Erfindung betrifft eine Anordnung zur Kühlung von Abgas und Ladeluft bei einem Kraftfahrzeug mit einem Turbolader gemäß dem Oberbegriff des Anspruches 1 sowie ein Verfahren zur Kühlung von Abgas und Ladeluft gemäß dem Oberbegriff des Anspruches 8.

Gemäß dem Stand der Technik werden zur Leistungssteigerung von Motoren Turbolader zur Verdichtung der Luft verwendet. Hierbei erfolgt jedoch eine Erwärmung der Luft, im Folgenden als Ladeluft bezeichnet, in Folge der Kompression im Turbolader auf Temperaturen von über 100°C. Um eine derartige Lufterwärmung zu vermindern, werden Luftkühler verwendet, die vorne im Kühlmodul angeordnet sind und zur Kühlung der Ladeluft dienen. Die Ladeluft strömt dabei durch einen Wärmetauscher, der von Umgebungsluft durchströmt und damit gekühlt wird. Dadurch ist eine Abkühlung der Ladeluft auf eine Temperatur möglich, die etwa 15-50 K über der Temperatur der Umgebungsluft liegt. Bei Teillast ist eine Abkühlung bis nahezu auf die Umgebungstemperatur möglich, jedoch verlässt das rückgeführte Abgas den Abgasrückführungs-Kühler je nach Betriebspunkt mit 150 bis 200°C. Dadurch ergibt sich insbesondre bei hohen Abgasrückführraten eine relativ hohe Mischtemperatur im Saugrohr. Ursache hierfür ist, dass als Rückkühlmedium für den Abgas-Kühler das heiße Motorkühlmittel dient, wodurch eine Abkühlung des Abgases auf unter 100°C auch bei einem sehr guten Austauschgrad des Abgas-Kühlers nicht möglich erscheint.

In der nachveröffentlichten DE 103 51 546 A1 wird vorgeschlagen, die hohe Temperatur des rückgeführten Abgases dadurch zu senken, dass ein weiterer Abgasrückführungs-Kühler verwendet wird, der mit Niedertemperatur-Kühlmittel oder Umgebungsluft gekühlt sein kann und dem ersten, mit Motorkühlmittel gekühlten Abgas-Kühler nachgeschaltet ist. Hierbei kann die Temperatur nach dem Mischen von Abgas und Ladeluft auf Grund der Kühlung des rückgeführten Abgasstroms durch das Motorkühlmittel nicht weit genug gesenkt werden, so dass dies sich nachteilig auf die Emissionen und den Verbrauch eines Dieselmotors auswirkt.

Aus der EP 170 498 A1 ist eine Vorrichtung zur thermischen Regelung der Ansaugluft eines Verbrennungsmotors für ein Kraftfahrzeug bekannt.

Die WO 03/069149 A1 offenbart ein Verfahren zur Regelung von Gasen, die dem Motor eines Kraftfahrzeuges zugeführt werden, sowie eine Vorrichtung zur Regelung der Temperatur der besagten Gase.

Aus der WO 2004/044402 A1 ist eine Vorrichtung zur thermischen Regelung der Ansaugluft für einen Motor und für rückgeführtes Abgas bekannt.

Wenn ein zusätzlicher Kühler für den Abgasstrom vorgesehen ist, der mit Niedertemperatur-Kühlmittel oder Umgebungsluft gekühlt wird, so erhöhen sich die Herstellungskosten der Anordnung deutlich.

Wird nach dem Zusammenführen des Abgases und der Ladeluft der Gasstrom über einen Kühler geführt, so wird die Anordnung kostengünstiger, jedoch gibt es bei dieser Variante ein Verschmutzungsproblem auf Grund der Partikel, im Abgasstrom, das bei der gewünschten Wärmeübertragungsleistung nicht geklärt ist.

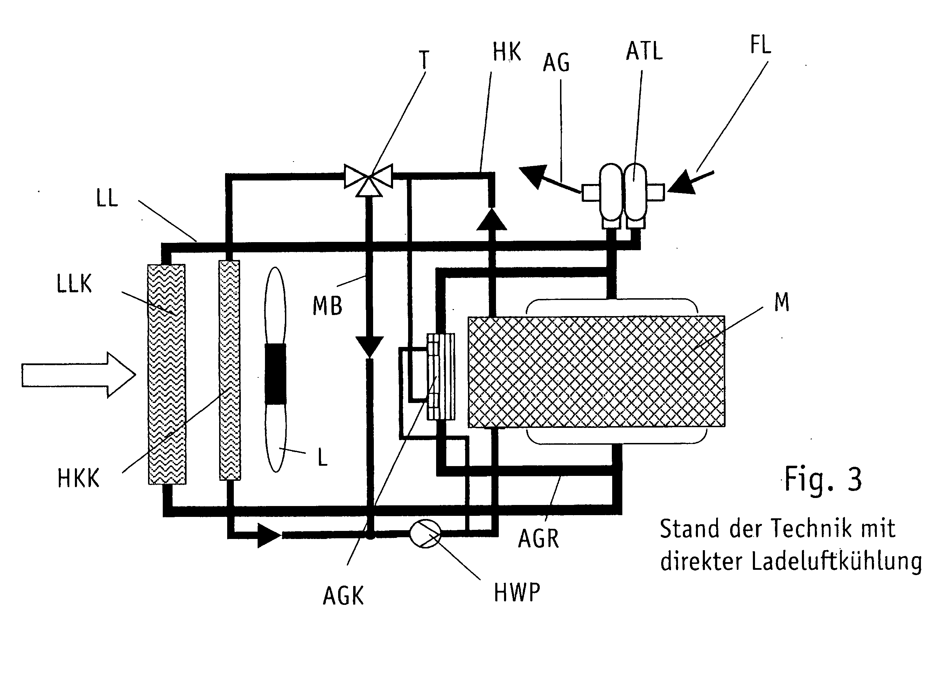

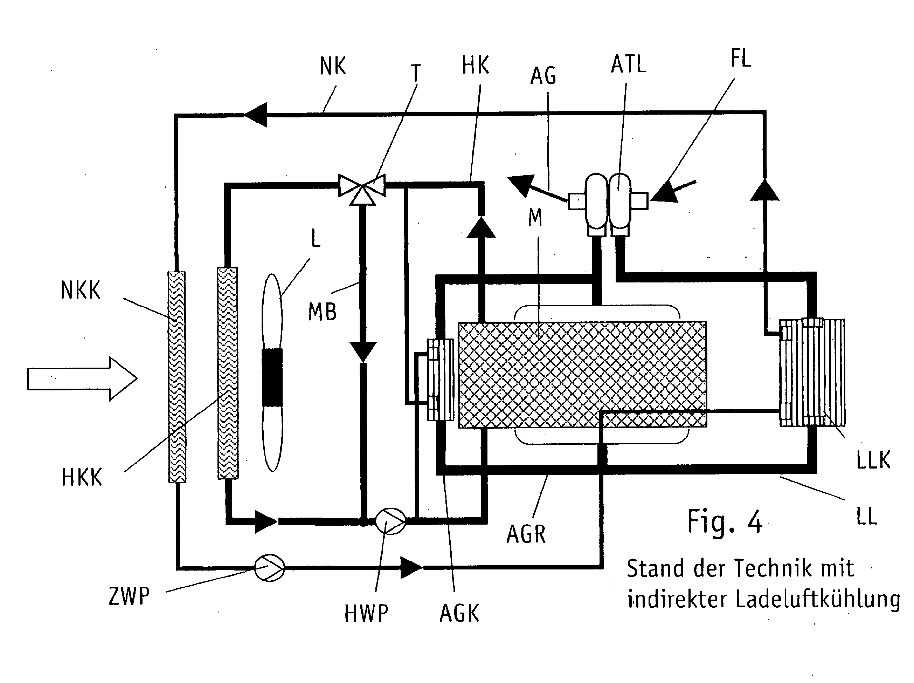

In Fig. 3 ist eine Anordnung mit direkter Ladeluftkühlung und in Fig. 4 mit indirekter Ladeluftkühlung gemäß dem Stand der Technik beispielhaft dargestellt.

Es ist Aufgabe der Erfindung, eine Anordnung der eingangs genannten Art zu verbessern, wobei bei möglichst geringen Herstellungskosten eine optimierte Abkühlung des Gasgemisches aus rückgeführtem Abgas und Ladeluft ermöglicht werden soll.

Diese Aufgabe wird gelöst durch eine Anordnung mit den Merkmalen des Anspruchs 1.

Erfindungsgemäß ist eine Anordnung zur Kühlung von rückgeführtem Abgas und Ladeluft bei einem Kraftfahrzeug mit einem Turbolader mit mindestens je einem Wärmetauscher für den Abgasstrom und einem Wärmetauscher für den Ladeluftstrom, vorgesehen, wobei mindestens jeweils ein Wärmetauscher für den Abgasstrom und ein Wärmetauscher für den Ladeluftstrom Teil eines gemeinsamen Niedertemperaturkühlmittel-Kreislaufs sind.

Erfindungsgemäß weist die Anordnung einen Hauptkühlmittel-Kreislauf HK und einen Nebenkühlmittel-Kreislauf NK auf.

Zur Regelung des Kühlmittelstroms im Niedertemperaturkühlmittel-Kreislauf ist in einem der beiden parallelgeschalteten Bereiche des Niedertemperaturkühlmittel-Kreislaufs ein Drosselorgan angeordnet. Dieses ist im Teil nach dem Ladeluft-Kühler am Kühlmittelaustritt angeordnet, da die Austrittstemperatur des Kühlmittels aus dem Ladeluft-Kühler in Zusammenhang mit der Belastung des Motors steht, so dass eine einfache temperaturabhängige Regelung über ein Drehnstoffelement möglich ist.

Vorzugsweise sind die beiden Wärmetauscher im Niedertemperaturkühlmittel-Kreislauf parallelgeschaltet, wobei die Kühlmittelverteilung bedarfsorientiert erfolgt, d.h. bei geringer Motorlast/Drehzahl wird insbesondere der Abgas-Kühler und bei hoher Motorlast/Drehzahl wird insbesondere der Ladeluft-Kühler von Kühlmittel durchströmt. Im falle maximaler Motorlast/Drehzahl wird bevorzugt ausschließlich der Ladeluft-Kühler durchströmt.

Zum Umwälzen des Kühlmittels ist im Niedertemperaturkühlmittel-Kreislauf eine Pumpe angeordnet, wobei es sich bevorzugt um eine schaltbare, gegebenenfalls auch regelbare Pumpe handelt.

Die Pumpe ist bevorzugt vor der Verzweigung des Niedertemperaturkühlmittel-Kreislaufs angeordnet, so dass beide Zweige des Niedertemperaturkühlmittel-Kreislaufs optimal mit Kühlmittel versorgt werden können.

Im Folgenden wird die Erfindung anhand eines Ausführungsbeispieis mit Varianten unter Bezugnahme auf die Zeichnung im Einzelnen erläutert. In der Zeichnung zeigen:
- Fig. 1: eine schematische Darstellung einer erfindungsgemäßen Anordnung zur Kühlung von Abgas und Ladeluft bei einem Kraftfahrzeug gemäß dem Ausführungsbeispiel,
- Fig. 2: eine schematische Darstellung des Verlaufs der abzuführenden Wärmemenge im Ladeluft-Kühler und Abgas-Kühler über der Motorlast, wobei die maximale Kühlleistung bei einer herkömmlichen Anordnung mit einer erfindungsgemäßen Anordnung verglichen wird,
- Fig. 3: eine Anordnung mit direkter Ladeluftkühlung gemäß dem Stand der Technik, und
- Fig. 4: eine Anordnung mit indirekter Ladeluftkühlung gemäß dem Stand der Technik.

Eine Anordnung A zur Kühlung von Abgas AG und Ladeluft LL bei einem Kraftfahrzeug mit einem (Abgas-)Turbolader ATL weist einen Hauptkühlmittel-Kreislauf HK und einen Nebenkühlmittel-Kreislauf NK auf, auf die an späterer Stelle näher eingegangen wird.

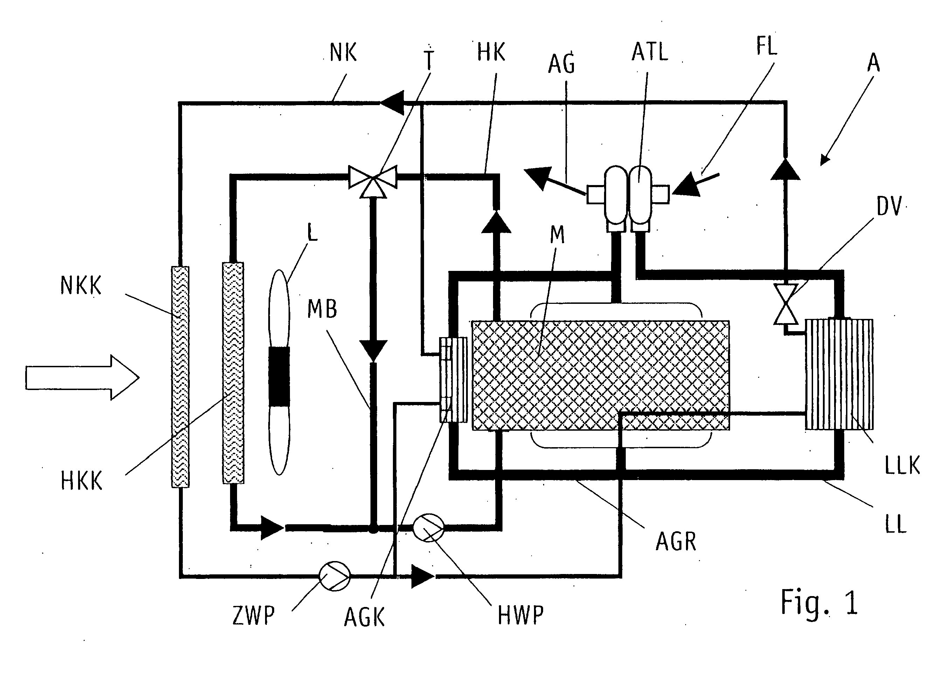

Vom Turbolader ATL wird Frischluft FL (angedeutet in Fig. 1 durch einen Pfeil) aus der Umgebung angesaugt, diese verdichtet, in einem Ladeluft-Kühler LLK gekühlt und einem Motor M zugeführt. Gemeinsam und vermischt mit der verdichteten, gekühlten Ladeluft LL wird dem Motor M über eine Abgasrückführung AGR zurückgeführtes und mittels eines Abgas-Kühler AGK gekühltes Abgas AG zugeführt, welches je nach Bedarf dem Abgasstrom nach Verlassen des Motors M abgezweigt, rückgeführt und der Ladeluft LL beigemischt wird oder abgeführt (angedeutet durch einen Pfeil in Fig. 1) wird.

Die Motorkühlung erfolgt mittels eines im Hauptkühlmittel-Kreislauf HK zirkulierenden Kühlmittels, welches über eine Hauptwasser-Pumpe HWP umgewälzt wird. Je nach Temperatur nach Durchströmen des Motors M wird das Kühlmittel, geregelt durch einen Thermostaten T, durch einen unterstützt von einem Lüfter L luftgekühlten Hauptkühlmittel-Kühler HKK oder vorbei an diesem durch einen Motorbypass MB und wieder zur Pumpe HWP geleitet.

Die Kühlung der Ladeluft LL sowie des Abgases AG erfolgt mittels eines im Niedertemperaturkühlmittel-Kreislauf NK zirkulierenden Kühlmittels, das von einer schaltbaren Zusatzwasser-Pumpe ZWP umgewälzt wird. Kurz nach der Pumpe ZWP ist eine Verzweigung vorgesehen, wobei ein Weg über den Abgas-Kühler AGK und der zweite Weg über den Ladeluft-Kühler LLK und ein hiernach angeordnetes und der Regelung der Kühlmittelverteilung dienendes, temperaturgesteuertes Drosselventil DV führt. Die beiden Kühlmittelströme werden anschließend wieder zusammengeführt und durchströmen einen parallel in Luftströmungsrichtung gesehen vor dem Hauptkühlmittel-Kühler HKK angeordneten Niedertemperaturkühlmittel-Kühler NKK und gelangen wiederum zur Pumpe ZWP.

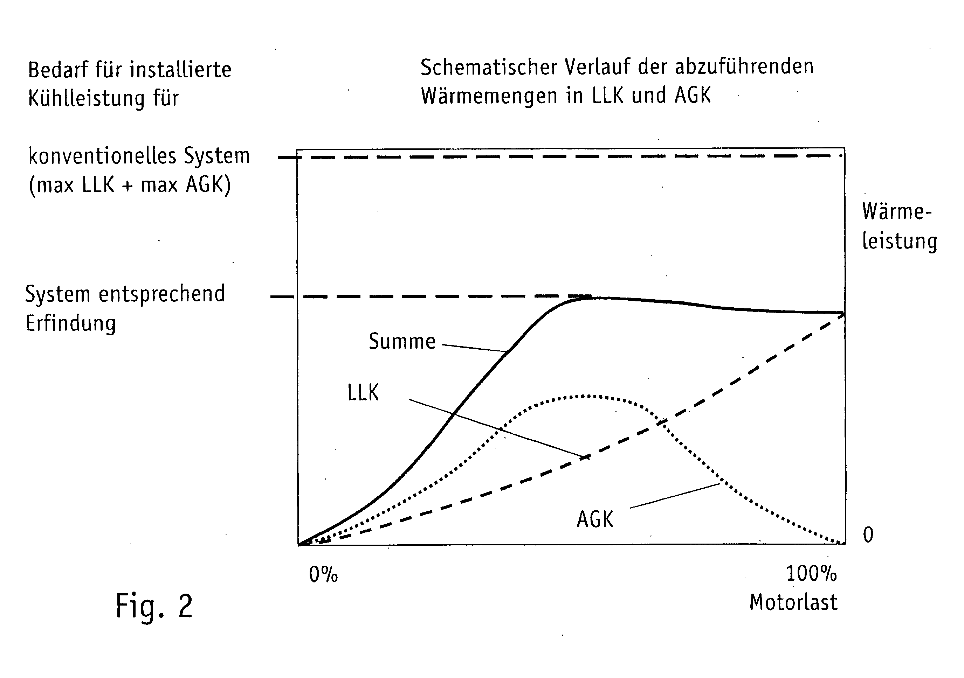

Wie aus Fig. 2 ersichtlich ist, steigt der Kühlbedarf, d.h. die abzuführende Wärmemenge, im Ladeluft-Kühler LLK mit zunehmender Motorlast an, während der Kühlbedarf des Abgas-Kühlers AGK im mittleren Motorlastbereich maximal ist und bei weiter steigender Motorlast wieder auf etwa Null abfällt, so dass sich ein Gesamtkühlbedarf ergibt, der bis zu etwa 50%-iger Motorlast stetig ansteigt und annähernd auf dem Maximalwert verbleibt.

Da die Kühlmitteltemperatur am Kühlmittelaustritt des Ladeluft-Kühlers LLK in Zusammenhang mit der Motorlast steht, ermöglicht das Drosselventil DV, vorliegend ein Dehnstoffelement, auf einfache und kostengünstige Weise eine weitgehend optimierte Verteilung des Kühlmittelstroms auf die beiden Kühler AGK und LLK, so dass bei niedrigen bis mittleren Motorlasten und Drehzahlen hauptsächlich der Abgas-Kühler AGK durchströmt wird, während im Bereich der Volllast und bei hohen Drehzahlen hauptsächlich der Ladeluft-Kühler LLK durchströmt wird, und sich insgesamt die Mischtemperatur aus rückgeführtem Abgas AG und Ladeluft LL dem erreichbaren Minimum sehr stark annähert.

Gemäß einer alternativen Ausführungsform ist ein Drosselorgan in der Abgasrückführung AGR oder an einer anderen Stelle der Ladeluftführung angeordnet. Dabei wird beispielsweise die Kühlmitteltemperatur am Austritt des Abgas-Kühlers AGK und des Ladeluft-Kühlers LLK jeweils mittels eines Sensors ermittelt und das Drosselorgan über eine entsprechend definierte Logik angesteuert.

Ferner kann eine regelbare Zusatzkühlmittel-Pumpe anstelle der gemäß dem Ausführungsbeispiel vorgesehenen schaltbaren Zusatzkühlmittel-Pumpe ZKP vorgesehen sein. Diese ermöglicht eine genauere Anpassung des Kühlmittelvolumenstroms an den aktuellen Bedarf, jedoch sind die Kosten für eine regelbare Pumpe und die entsprechende Steuerung unter Umständen höher als die Kosten einer einfacheren Pumpe.

Als dritte Variante ist auch eine serielle Anordnung der Wärmetauscher im Niedertemperaturkühlmittel-Kreislauf möglich, diese bedingt jedoch eine Vorerwärmung des Kühlmittels beim Eintritt in den stromabwärts angeordneten zweiten Wärmetauscher durch die Wärmelast des ersten Wärmetauschers, was gegenüber der parallelen Anordnung der Wärmetauscher unter Umständen zu einer erhöhten Temperatur des Gasgemisches führt. Dabei kann beispielsweise am ersten Wärmetauscher ein bevorzugt über ein Drosselorgan regelbarer Kühlmittel-Bypass vorgesehen sein.

Die Abgasrückführung kann im Rahmen der vorliegenden Erfindung auf der Hochdruckseite oder auf der Niederdruckseite des Ladeluft- bzw. Abgasführungssystems, jeweils von einem Turbolader aus gesehen, erfolgen.

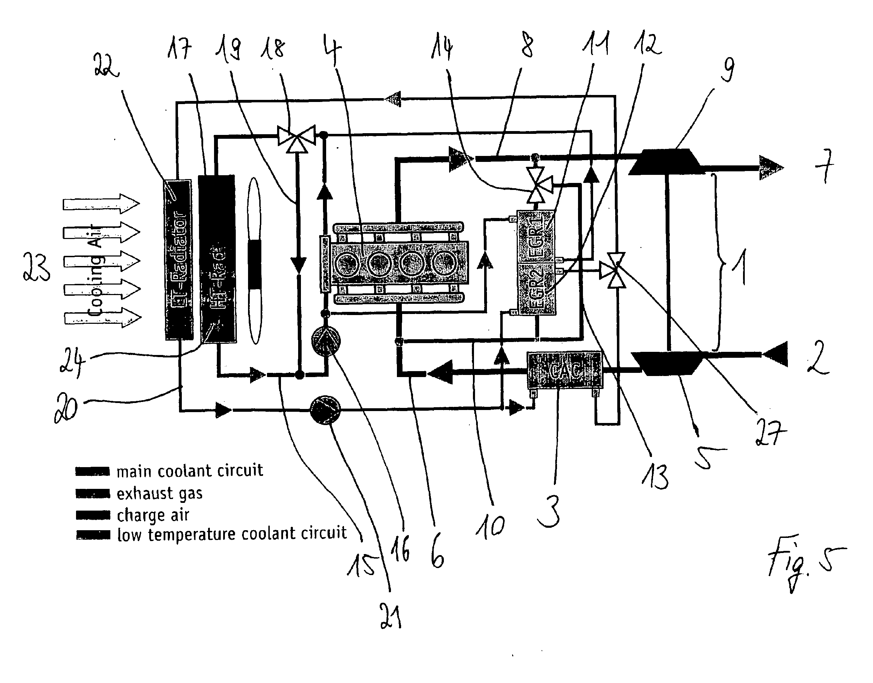

Fig. 5 zeigt ein Ausführungsbeispiel der vorliegenden Erfindung, bei dem das Abgas auf der Hochdruckseite des Abgasturboladers 1 rückgeführt wird. Frischluft 2 wird von der Pumpe 5 des Abgasturboladers 1 angesaugt und komprimiert. Wärme, die dabei entsteht, wird in einem Ladeluftkühler 3 abgegeben, so dass die Ladeluft in gekühltem Zustand über die Ladeluftleitung 6 dem Motor 4 zugeführt wird. Das Abgas 7 des Motors 4 wird über eine Abgasleitung 8 aus dem Motor 4 abgeführt und treibt eine Turbine 9 des Abgasturboladers 1 an.

Zumindest in einigen Betriebszuständen des Motors 4 wird ein Teil des Abgases 7 über eine Abgasrückführleitung 10 der Ladeluft in der Ladeluftleitung 6 zugeführt. In der Abgasrückführleitung 10 befinden sich für eine zweistufige Abgasrückführkühlung zwei Abgaskühler 11, 12, die über eine Bypassleitung 13 umgehbar sind. Beispielsweise während einer Aufwärmphase des Motors 4 ist eine verminderte Kühlung des rückgeführten Abgases erwünscht, so dass in diesem Fall ein Ventil 14, vorzugsweise als Bypassklappe ausgebildet, das rückzuführende Abgas in den Bypasskanal 13 lenkt. Gemäß einer bevorzugten Ausführungsform ist das Ventil 14 als Dreiwegeventil ausgebildet und regelt auch die rückgeführte Abgasmenge.

Ein Hauptkühlkreislauf 15 für die Kühlung des Motors 4 wird von einem Kühlmittel durchströmt, das von einer Hauptkühlmittelpumpe 16 umgewälzt und von einem Hauptkühlmittelkühler 17 gekühlt wird, wobei der Hauptkühlmittelkühler 17 mittels eines Ventils 18, vorzugsweise als Thermostat ausgebildet, über eine Bypassleitung 19 umgehbar ist.

Ein Niedertemperaturkühlkreislauf 20 für die Kühlung des Ladeluftkühlers 3 wird von einem Kühlmittel durchströmt, das von einer Zusatzkühlmittelpumpe 21 umgewälzt und von einem Niedertemperaturkühlmittelkühler 22 gekühlt wird, wobei der Niedertemperaturkühler 22 und der Hauptkühlmittelkühler 17 nacheinander von Kühlluft 23 durchströmt werden, die wiederum in einigen Betriebszuständen von einem Lüfter 24 angesaugt wird.

Die erste Stufe der zweistufigen Abgasrückführkühlung wird durch den Abgaskühler 11 gebildet, der parallel zum Motor 4 in den Hauptkühlkreislauf 15 eingebunden ist und einem Wärmeübertrag von dem rückzuführenden Abgas auf das Kühlmittel in dem Hauptkühlkreislauf 15 dient.

Die zweite Stufe der zweistufigen Abgasrückführkühlung wird durch den Abgaskühler 12 gebildet, der parallel zum Ladeluftkühler 3 in den Niedertemperaturkühlkreislauf 20 eingebunden ist und einem Wärmeübertrag von dem rückzuführenden Abgas auf das Kühlmittel in dem Niedertemperaturkühlkreislauf 20 dient. Somit ist eine effektivere Kühlung des rückzuführenden Abgases möglich.

Ähnlich wie in Fig. 1 kann ein regelbares Drosselventil nach dem Abgaskühler 12 oder nach dem Ladeluftkühler 3 angeordnet sein. Bei dem gezeigten Ausführungsbeispiel ist das Drosselventil als Dreiwegeventil 27 ausgebildet, das entweder nur für Kühlmittel aus dem Abgaskühler 12 oder nur für Kühlmittel aus dem Ladeluftkühler 3 durchlässig ist oder vorzugsweise stufenlos ein Mengenverhältnis der beiden Kühlmittelströme reguliert, beispielsweise in Abhängigkeit der Kühlmitteltemperatur, insbesondere mit Hilfe eines Dehnstoffelements. Bei anderen Ausführungsbeispielen ist stattdessen oder zusätzlich eine feste Drossel nach zumindest einem der beiden Wärmeübertrager vorgesehen, die unter Umständen auch entfällt, wenn beispielsweise ein kühlmittelseitiger Druckabfall über den Abgaskühler 12 in einem vorgegebenen Verhältnis zu einem kühlmittelseitigen Druckabfall über den Ladeluftkühler 3 steht. In diesem Fall wird das oben genannte Mengenverhältnis auf einen zweckmäßigen Wert eingestellt.

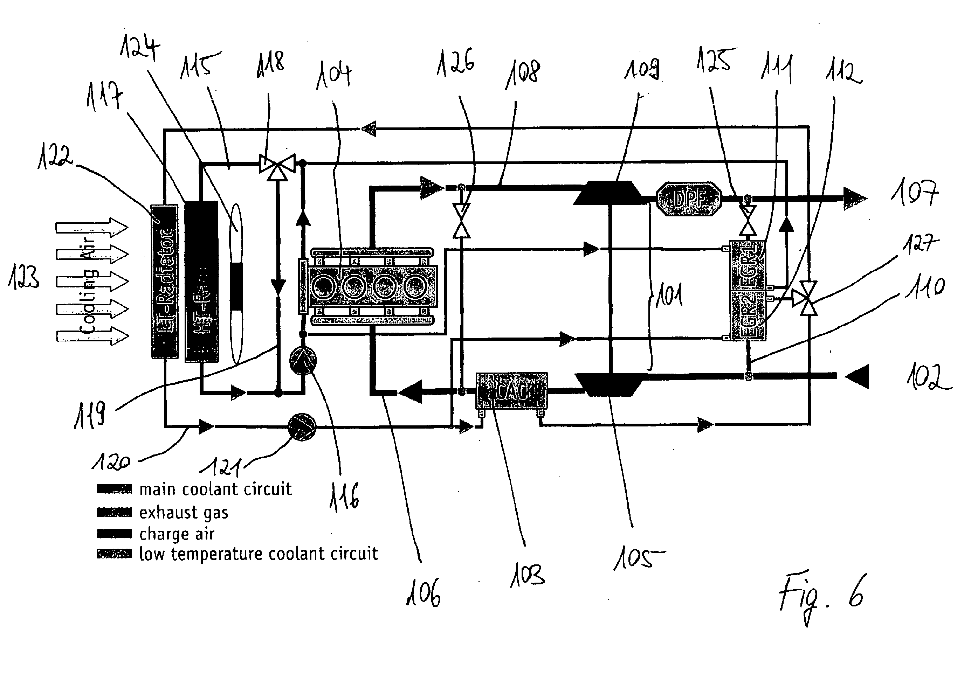

Fig. 6 zeigt ein Ausführungsbeispiel der vorliegenden Erfindung, bei dem das Abgas auf der Niederdruckseite des Abgasturboladers 101 rückgeführt wird. Frischluft 102 wird zumindest in einigen Betriebszuständen eines Motors 104 mit rückgeführtem Abgas gemischt und von der Pumpe 105 des Abgasturboladers 101 angesaugt und komprimiert. Wärme, die dabei entsteht, wird in einem Ladeluftkühler 103 an ein Kühlmittel abgegeben, so dass die Ladeluft in gekühltem Zustand über die Ladeluftleitung 106 dem Motor 104 zugeführt wird. Das Abgas 107 des Motors 104 wird über eine Abgasleitung 108 aus dem Motor 104 abgeführt und treibt eine Turbine 109 des Abgasturboladers 101 an.

Zumindest in einigen Betriebszuständen des Motors 104 wird ein Teil des Abgases 107 mittels eines Abgasrückführventils 125 über eine Abgasrückführleitung 110 der Ansaugluft 102 zugemischt. In der Abgasrückführleitung 110 befinden sich für eine zweistufige Abgasrückführkühlung zwei Abgaskühler 111, 112. Auf der Hochdruckseite ist eine Bypassleitung 113 vorgesehen, über die mittels eines Bypassventils 126 ein Teil des Abgases ohne speziell vorgesehene Kühlung der Ladeluftleitung 106 zuführbar ist. Beispielsweise während einer Aufwärmphase des Motors 104 ist eine verminderte Kühlung des rückgeführten Abgases erwünscht, so dass in diesem Fall das Bypassventil 126 das rückzuführende Abgas in die Ladeluftleitung 106 lenkt. Das Abgas wird dabei auf der Hochdruckseite, auf der die Abgastemperatur höher als auf der Niederdruckseite ist, rückgeführt, damit in dem betreffenden Betriebszustand des Motors 104 möglichst wenig Wärme verloren geht

Ein Hauptkühlkreislauf 115 für die Kühlung des Motors 104 wird von einem Kühlmittel durchströmt, das von einer Hauptkühlmittelpumpe 116 umgewälzt und von einem Hauptkühlmittelkühler 117 gekühlt wird, wobei der Hauptkühlmittelkühler 117 mittels eines Ventils 118, vorzugsweise als Thermostat ausgebildet, über eine Bypassleitung 119 umgehbar ist.

Ein Niedertemperaturkühlkreislauf 120 für die Kühlung des Ladeluftkühlers 103 wird von einem Kühlmittel durchströmt, das von einer Zusatzkühlmittelpumpe 121 umgewälzt und von einem Niedertemperaturkühlmittelkühler 122 gekühlt wird, wobei der Niedertemperaturkühler 122 und der Hauptkühlmittelkühler 117 nacheinander von Kühlluft 123 durchströmt werden, die wiederum in einigen Betriebszuständen von einem Lüfter 124 angesaugt wird.

Die erste Stufe der zweistufigen Abgasrückführkühlung wird durch den Abgaskühler 111 gebildet, der parallel zum Motor 104 in den Hauptkühlkreislauf 115 eingebunden ist und einem Wärmeübertrag von dem rückzuführenden Abgas auf das Kühlmittel in dem Hauptkühlkreislauf 115 dient.

Die zweite Stufe der zweistufigen Abgasrückführkühlung wird durch den Abgaskühler 112 gebildet, der parallel zum Ladeluftkühler 103 in den Niedertemperaturkühlkreislauf 120 eingebunden ist und einem Wärmeübertrag von dem rückzuführenden Abgas auf das Kühlmittel in dem Niedertemperaturkühlkreislauf 120 dient. Somit ist auch hier eine effektivere Kühlung des rückzuführenden Abgases möglich.

Ähnlich wie in Fig. 1 kann ein regelbares Drosselventil nach dem Abgaskühler 112 oder nach dem Ladeluftkühler 103 angeordnet sein. Bei dem gezeigten Ausführungsbeispiel ist das Drosselventil als Dreiwegeventil 127 ausgebildet, das entweder nur für Kühlmittel aus dem Abgaskühler 112 oder nur für Kühlmittel aus dem Ladeluftkühler 103 durchlässig ist oder vorzugsweise stufenlos ein Mengenverhältnis der beiden Kühlmittelströme reguliert, beispielsweise in Abhängigkeit der Kühlmitteltemperatur, insbesondere mit Hilfe eines Dehnstoffelements. Bei anderen Ausführungsbeispielen ist stattdessen oder zusätzlich eine feste Drossel nach zumindest einem der beiden Wärmeübertrager vorgesehen, die unter Umständen auch entfällt, wenn beispielsweise ein kühlmittelseitiger Druckabfall über den Abgaskühler 112 in einem vorgegebenen Verhältnis zu einem kühlmittelseitigen Druckabfall über den Ladeluftkühler 103 steht. In diesem Fall wird das oben genannte Mengenverhältnis auf einen zweckmäßigen Wert eingestellt.

### Bezugszeichenliste

A Anordnung zur Kühlung von rückgeführtem Abgas und Ladeluft
AG Abgas
AGK Abgas-Kühler
AGR Abgasrückführung
ATL Abgasturbolader
DV Drosselventil
FL Frischluft
HK Hauptkühlmittel-Kreislauf.
HKK Hauptkühlmittel-Kühler
HWP Hauptwasser-Pumpe
L Lüfter
LL Ladeluft
LLK Ladeluft-Kühler
M Motor
MB Motorbypass
NK Niedertemperaturkühlmittel-Kreislauf
NKK Niedertemperaturkühlmittel-Kühler
T Thermostat
ZWP Zusatzkühlmittel-Pumpe

## Patentansprüche

1. Anordnung (A) zur Kühlung von rückgeführtem Abgas (AG) und Ladeluft (LL) bei einem Kraftfahrzeug mit einem Turbolader, mit einem Hauptkühlmittel-Kreislauf (HK) und einem Niedertemperaturkühlmittel-Kreislauf (NK) mit mindestens je einem Wärmetauscher für den Abgasstrom und einem Wärmetauscher für den Ladeluftstrom, wobei mindestens jeweils ein Wärmetauscher für den Abgasstrom und ein Wärmetauscher für den Ladeluftstrom Teil eines gemeinsamen Niedertemperaturkühlmittel-Kreislaufs (NK) sind und ein Drosselorgan (DV) zur Regelung des Kühlmittelstroms im Niedertemperaturkühlmittel-Kreislauf (NK) am Kühlmittelaustritt des Ladeluft-Kühlers (LLK) angeordnet ist **dadurch gekennzeichnet, dass** das Drosselorgan (DV) ein Dehnstoffelement aufweist.

2. Anordnung nach Anspruch 1, **dadurch gekennzeichnet, dass** die beiden Wärmetauscher im Niedertemperaturkühlmittel-Kreislauf (NK) parallelgeschaltet sind.

3. Anordnung nach Anspruch 1 oder 2, **dadurch gekennzeichnet, dass** im Niedertemperaturkühlmittel-Kreislauf (NK) eine Pumpe (ZWP) angeordnet ist.

4. Anordnung nach Anspruch 3, **dadurch gekennzeichnet, dass** die Pumpe (ZWP) regelbar oder schaltbar ist.

5. Anordnung nach einem der Ansprüche 3 und 4, **dadurch gekennzeichnet, dass** die Pumpe (ZWP) vor der Verzweigung des Niedertemperaturkühlmittel-Kreislaufs (NK) angeordnet ist.

6. Anordnung nach einem der vorhergehenden Ansprüche, **dadurch gekennzeichnet, dass** Teil des Niedertemperaturkühlmittel-Kreislaufs (NK) ein luftgekühlter Niedertemperaturkühlmittel-Kühler (NKK) ist.

7. Anordnung nach Anspruch 1, **dadurch gekennzeichnet, dass** das Drosselorgan ein regelbares Drosselventil (DV) ist.

8. Verfahren zur Kühlung von Abgas und Ladeluft mit einer Anordnung nach einem der Ansprüche 1 bis 7 zur Kühlung von rückgeführtem Abgas (AG) und Ladeluft (LL) bei einem Kraftfahrzeug mit einem Turbolader mit mindestens je einem Wärmetauscher für den Abgasstrom und einem Wärmetauscher für den Ladeluftstrom, **dadurch gekennzeichnet, dass** zur Kühlung des rückgeführten Abgases (AG) und der Ladeluft (LL) Kühlmittel des gleichen Niedertemperaturkühlmittel-Kreislaufs (NK) verwendet wird.

9. Verfahren nach Anspruch 8, **dadurch gekennzeichnet, dass** das Kühlmittel bei niedrigen und mittleren Motorlasten und Drehzahlen zu mehr als 50% dem Abgas-Kühler (AGK) zugeführt wird.

10. Verfahren nach Anspruch 8 oder 9, **dadurch gekennzeichnet, dass** das Kühlmittel bei hohen Motorlasten und Drehzahlen, insbesondere im Bereich der Volllast, zu mehr als 50% dem Ladeluft-Kühler (LLK) zugeführt wird.

## Claims

1. An arrangement (A) for cooling recirculated exhaust gas (AG) and charge air (LL) in a motor vehicle with a turbocharger, with a main coolant circuit (HK) and a low temperature coolant circuit (NK) with at least one heat exchanger for the exhaust gas stream and one heat exchanger for the charge air stream, wherein at least one heat exchanger for the exhaust gas stream and one heat exchanger for the charge air stream are part of a common low temperature coolant circuit (NK), and a throttle member (DV) for controlling the coolant stream in the low temperature coolant circuit (NK) is arranged at the coolant outlet of the charge air cooler (LLK), **characterised in that** the throttle member (DV) has an expanding material element.

2. The arrangement as claimed in claim 1, **characterised in that** the two heat exchangers are connected in parallel in the low temperature coolant circuit (NK).

3. The arrangement as claimed in claim 1 or 2, **characterised in that** a pump (ZWP) is arranged in the low temperature coolant circuit (NK).

4. The arrangement as claimed in claim 3, **characterised in that** the pump (ZWP) is controllable or switchable.

5. The arrangement as claimed in one of claims 3 and 4, **characterised in that** the pump (ZWP) is arranged upstream of the branch-off of the low temperature coolant circuit (NK).

6. The arrangement as claimed in one of the preceding claims, **characterised in that** part of the low temperature coolant circuit (NKK) is an air-cooled low temperature coolant cooler (NK).

7. The arrangement as claimed in claim 1, **characterised in that** the throttle member is a controllable throttle valve (DV).

8. A method for cooling exhaust gas and charge air with an arrangement according to one of claims 1 to 7 for cooling recirculated exhaust gas (AG) and charge air (LL) in a motor vehicle with a turbocharger, with at least one heat exchanger for the exhaust gas stream and one heat exchanger for the charge air stream, **characterised in that** coolant from the same low temperature coolant circuit (NK) is used for cooling the recirculated exhaust gas (AG) and the charge air (LL).

9. The method as claimed in claim 8, **characterised in that** more than 50% of the coolant is fed to the exhaust gas cooler (AGK) at low and medium engine loads and speeds.

10. The method as claimed in claim 8 or 9, **characterised in that** more than 50% of the coolant is fed to the charge air cooler (LLK) at high engine loads and speeds, in particular in the full load range.

## Revendications

1. Agencement (A) servant au refroidissement de gaz d'échappement recyclés (AG) et d'air de suralimentation (LL) concernant un véhicule automobile comprenant un turbocompresseur, un circuit principal de liquide de refroidissement (HK) et un circuit de liquide de refroidissement à basse température (NK) comportant à chaque fois au moins un échangeur de chaleur pour le flux de gaz d'échappement et un échangeur de chaleur pour le flux d'air de suralimentation où, à chaque fois, au moins un échangeur de chaleur pour le flux de gaz d'échappement et un échangeur de chaleur pour le flux d'air de suralimentation font partie d'un circuit commun de liquide de refroidissement à basse température (NK), et un organe d'étranglement (DV) servant à la régulation du flux de liquide de refroidissement dans le circuit de liquide de refroidissement à basse température (NK) est disposé à la sortie du liquide de refroidissement du refroidisseur d'air de suralimentation (LLK),
**caractérisé en ce que** l'organe d'étranglement (DV) présente un élément thermostatique.

2. Agencement selon la revendication 1, **caractérisé en ce que** les deux échangeurs de chaleur sont montés en parallèle dans le circuit de liquide de refroidissement à basse température (NK).

3. Agencement selon à revendication 1 ou 2, **caractérisé en ce qu'**une pompe (ZWP) est disposée dans le circuit de liquide de refroidissement à basse température (NK).

4. Agencement selon la revendication 3, **caractérisé en ce que** la pompe (ZWP) est réglable ou actionnable.

5. Agencement selon l'une des revendications 3 et 4, **caractérisé en ce que** la pompe (ZWP) est disposée en amont de la bifurcation du circuit de liquide de refroidissement à basse température (NK).

6. Agencement selon l'une quelconque des revendications précédentes, **caractérisé en ce qu'**un refroidisseur de liquide de refroidissement à basse température (NKK), à refroidissement à air, fait partie du circuit de liquide de refroidissement à basse température (NK).

7. Agencement selon la revendication 1, **caractérisé en ce que** l'organe d'étranglement est une soupape d'étranglement réglable (DV).

8. Procédé de refroidissement de gaz d'échappement et d'air de suralimentation comprenant un agencement selon l'une quelconque des revendications 1 à 7, servant au refroidissement de gaz d'échappement recyclés (AG) et d'air de suralimentation (LL) concernant un véhicule automobile comprenant un turbocompresseur comportant à chaque fois au moins un échangeur de chaleur pour le flux de gaz d'échappement et un échangeur de chaleur pour le flux d'air de suralimentation, **caractérisé en ce que**, pour le refroidissement des gaz d'échappement recyclés (AG) et de l'air de suralimentation (LL), on utilise du liquide de refroidissement provenant du même circuit de liquide de refroidissement à basse température (NK).

9. Procédé selon la revendication 8, **caractérisé en ce que** le liquide de refroidissement est fourni, à plus de 50 %, au refroidisseur de gaz d'échappement (AGK), dans le cas de charges du moteur et de vitesses de rotation, basses et moyennes.

10. Procédé selon la revendication 8 ou 9, **caractérisé en ce que** le liquide de refroidissement est fourni, à plus de 50 %, au refroidisseur d'air de suralimentation (LLK), dans le cas de charges du moteur et de vitesses de rotation, élevées, en particulier dans la plage à pleine charge.
